# NEW EUROPEAN PATENT SPECIFICATION

(11) **EP 0 469 094 B2**
(45) Date of publication and mention of the opposition decision: **24.01.2001**
(45) Mention of the grant of the patent: 14.09.1994
(21) Application number: 90908099.6
(22) Date of filing: 19.04.1990
(51) Int. Cl.: G08G 5/06, G01S 13/91

(54) **AN AIRCRAFT PARKING AND INFORMATION SYSTEM**
FLUGZEUGPARK- UND INFORMATIONSSYSTEM
SYSTEME POUR L'INFORMATION ET LE PARCAGE D'AERONEFS

(30) Priority: 19.04.1989 SE 8901409
(43) Date of publication of application: 05.02.1992
(73) Proprietor: FMT INTERNATIONAL TRADE AB, S-231 32 Trelleborg (SE)
(72) Inventor: ANDERBERG, Nils-Eric, S-231 96 Trelleborg (SE)
(74) Representative: Perklev, Karin Cecilia
(86) International application number: SE9000260
(87) International publication number: WO9013104

(56) References cited:
- DE-B- 2 743 281
- GB-A- 2 162 672
- US-A- 3 872 474
- Airport Forum 1/1989 pp.48-50,53

## Description

The subject invention concerns, generally, a system designed to provide ground personnel in an airport with information, and a guidance system for parking aircraft in airports, and more precisely it concerns a system devised to guide the pilot in charge of the aircraft with extreme precision to allow him to stop the aircraft exactly at a carefully predetermined stopping point in an airport.

Prior art systems for this purpose are based on technologies differing from that in accordance with the invention. One such system is disclosed in SE 403 999.

All prior art systems are based on the method according to which the aircraft nose wheel has to roll over a number of ground embedded sensors positioned in a successive row in the direction of movement of the aircraft. All systems mentioned above make use of inductive loops the number ofwhich varies depending on brand but usually they comprise between 15 and 3 loops for each type of aircraft. All these systems suffer from considerable deficiencies, particularly as concerns the need to cast the loops in the ground and the tendency of such loops to break as a consequence of movements occurring in the concrete slabs, resulting in the apron or parking space having to be closed off for long periods to repair the loops. All systems of this kind, as also prior art systems of other types available on the world market, cannot either be used to provide or display any other information than that intended for parking the aircraft.

In a document Airport Forum 1/1989, page 49, a moiré approach system is disclosed. In connection herewith it is mentioned that greater parking accuracy can be obtained by using a laser ranger.

The main purpose of the invention is to provide a system of the type outlined initially which meets all demands on reliability, flexibility and precision and which is particularly devised for use with aircraft which arrive at civil airports and must be stopped exactly opposite a passenger bridge or some other carefully predetermined stopping point on an airport parking apron. An additional object of the subject invention is to replace the prior art loops embedded in the ground with a system that does not require interference with the ground on the parking apron.

The invention as claimed is based on the principle of using microwaves to guide and inform the aircraft pilots of the exact stopping position. The docking system comprises a display unit which is positioned ahead of the exact final stopping point of the aircraft. In the display unit or in the immediate vicinity thereof a microwave aerial is positioned to emit radiowaves directed towards the aircraft. By measuring the difference between emitted and reflected radiowaves (echo) the position of the aircraft can be analyzed with great accuracy by a computer.

When the display unit is not used for aircraft parking purposes the control system of the display unit is connected to the FIDS system (Flight Information and Destination System) of the airport, allowing the display unit to serve as an information display providing the ground personnel in the airport with information and showing flight numbers of arriving aircraft, arrivals, arrival times, fuel quantities, flight numbers of departing aircraft, departures, departure times and local time.

By linking together the control system of the docking system and the airport FIDS system much of the equipment on the airport parking apron, such as the passenger bridge at the forwards exit, the passenger bridge at the rear exit, ground supply systems, luggage handing systems and pull-back systems, may be preset according to the type of the arriving aircraft.

Ministries of aviation and airlines have expressed demands and wishes for improved visibility and precision of existing docking systems. In addition, the requirement for more information to be supplied from the FIDS system have led to an attempt to devise means for higher precision in the parking of aeroplanes and to the development of an information system designed for the ground personnel. This system is called APIS (Aircraft Parking and Information System).

The requirement and wishes put forward by the airlines could be summarized as follows:
1. Improved side-position information.
2. Improved display unit visibility in bright sunlight and no dazzling in the dark.
3. FIDS information when the parking system display is not used for aircraft parking purposes.
4. Additional automatic functions.

The service personnel of the Ministry of Aviation have put forward demands for improved operation accessibility and for simplified programming and maintenance routines. The requirements from the Ministry of Aviation could be summarized as follows:
1. The display should have no control systems or other sensitive equipment.
2. The control system should be positioned at ground level, e.g. inside the service building.
3. The sensors in the apron should be simple to replace.
4. All system programming to be avilable to the Ministry of Aviation.
5. All components incorporated in the system should be of standard type and available on the market.

The use of more automatic devices and quicker turn-rounds including the use of two bridges at the same gate (OTW BRIDGE) have resulted in increased demands for possibilites of communication between the FIDS/parking systems and the passenger bridges in order to eliminate to the largest possible extent all risks for damages on the aeroplanes and to facilitate the operator's maneouvering of two passenger bridges at the same time.

High-precision parking is particularly important when aircraft of many various types are to be received at one and the same apron and when embarking as well as debarking operations are realized with the aid of passenger bridges that are connected directly to the aircraft, and particularly with regard to aircraft of type DC-9 when an OTW-bridge is used.

The parking system APIS has been developed specifically with a view to meet all demands and requirements outlined in the aforegoing. The display unit provides lateral position information via an "INOGON" centre line beacon and longitudinal position information via alphanumerical display modules of type "FERRANTI PACKARD".

By communicating with the FIDS the novel parking system can provide the ground personnel with the desired information concerning the flight numbers of arriving as well as departing aeroplanes and also their arrival and departure times.

The system meets all requirements and recommendations put forward by ICAO. The lateral position information is designed for the pilot in the left hand chair.

For the APIS system the aim has been to use standard components which should be either easily replaceable or easy to repair. The central unit controlling and monitoring the entire parking system is placed inside the service building, ensuring that programming and replacement of faulty components may be effected indoors and at an ergonometrically correct level.

Great importance has also been given to make the information provided by the system visible also in strong sunlight, which is a problem found in most systems available on the market. Another aim has been to make it possible to display, with the aid of the APIS, further information useful to the pilots as well as to the personnel working in various functions around the aircraft, such as the flight number, arrival and departure times, present time, and so on.

The APIS system comprises four main components:
- Display unit, 1
- Control System, 2
- Operator's Panel, 3
- Radar, 4

All information for the pilots is shown on the display unit 1 which is positioned on the wall 6 of the terminal building 5 straight in front of the cockpit. The control system 2 transmits information received from the radar 4 and from the operator's panel 3/FIDS (Flight Information and Destination System) 11. Whether the APIS system is to be controlled via the operator's panel 3 or by the FIDS 11 may be determined by operating a push button positioned on the operator's panel 3 on the passenger bridge 12.

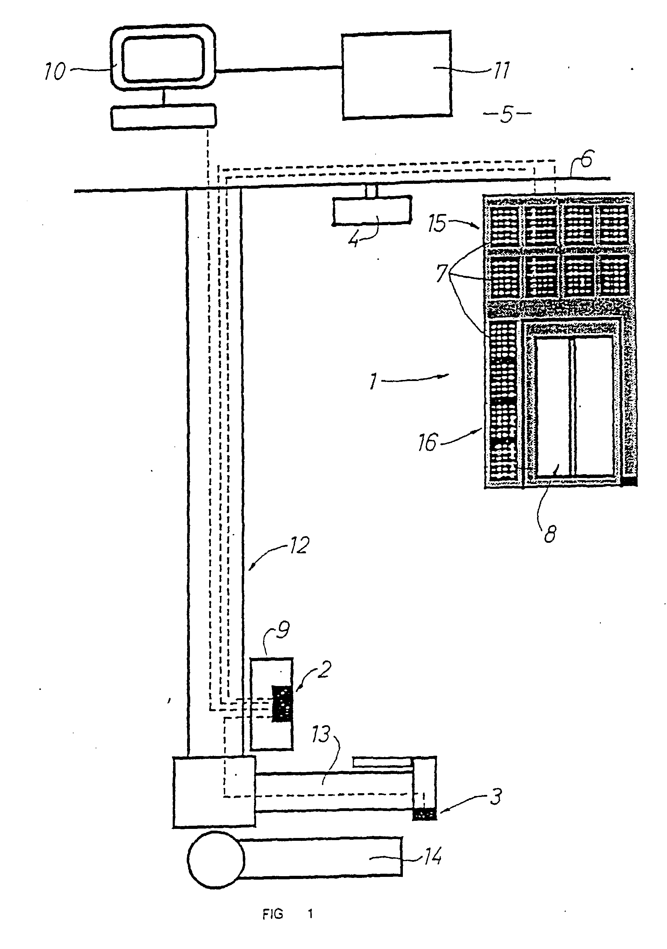

Fig. 1 illustrates generally the various components included in the APIS system and how they are interconnected.

A lay-out of the position of the wiring system is also illustrated in Fig. 1.

The main components will be described in closer detail in the following.

The display unit 1 which is a component included in the APIS system, is designed to provide the pilot with all the information he requires to guide the aircraft laterally and lengthwise in order to park the aircraft in the stop position. This information is available via two visual units, viz. alphanumerical displays 7 and centre line beacon 8 of Inogon type. The alphanumerical displays also provides the ground personnel concerned with information from the FIDS.

There are twelve alphanumerical displays 7 and the dimensions of each display are 213x150 mm.

Each alphanumerical display 7 consists of 35 dots arranged in seven vertical rows and five horizontal rows. The dot diameter is 24 mm.

On its one face each dot has a fluorescent paint and on the opposite face a black matted paint.

The various characters are formed with the aid of electro-magnetic coils which when actuated turn the dots which are to form the character in such a way that the selected dots present their fluorescent sides outwards. In order to turn the dots back to their original position, the coil polarity is shifted. Consequently, no current consumption is required to turn the dots.

Owing to the fluorescent paint the contrast of each character is increased as more light is added, such as is the case for instance in bright sunlight, but also when it is dark extraordinary visibility is achieved when the dots are illuminated.

The alphanumerical displays are controlled by the control unit inside the service building and by three power units each one of which supplies four alphanumerical units with power. The power unit which is provided on a printed circuit card is the only electronic device in the display and has been developed specifically to supply the alphanumerical displays.

The device for illumination of the alphanumerical displays 7 is lit up when the intensity of the surrounding light is too low. The intensity of the light is detected by a photo-electric cell.

The centre line beacon 8 is constructed from a moiré screen which is illuminated by six compact fluorescent tubes of 36W each, so that this unit as well may be lit up or darkened.

The centre line beacon is of the make Inogon which is used at a large number of. airports with satisfactory results.

The control system 2 is of the brand Omron and it is mounted in a box together with its associated connection strips. The box dimensions are 500x550x210 mm (Width, Height, Depth). The brain of the system is a micro computer 10 of type Omron Sysmac C200H.

All units including the micro computer are standard units which are available in most countries around the world.

The micro computer is prepared for communication with a main computer. The communication interface is RS-232C, alternatively RS-422. RS-422 makes it possible to communicate with several APIS systems, the maximum, however, being 32. The communication is effected by means of ASC11 characters in accordance with the Omron Host Link standard.

In addition to the micro computer and its inlets and outlets the box contains the following equipment:
- 24V D.C. voltage aggregate
- circuit breakers
- relays
- connection strips.

The micro computer continuously controls the status of the sensors and the information from the operator's panel 3 or from the FIDS system 11. The computer programme processes the information and on demand transmits signals to both the display 1 and the operator's panel 3/FIDS system 11.

The operator's panel 3 has been designed for the Landvetter Airport in association with airlines and the personnel of the Ministry of Aviation and it consists of eight large push buttons intended for the eight most frequent aircraft types. There are two additional buttons with the aid of which it is possible to stepwise, backwards or forwards, obtain access to information concerning several other types of aircraft. When selecting the aircraft type by means of these buttons the aircraft type is indicated in a minidisplay positioned on the operator's panel on the passenger bridge.

As soon as the desired aircraft type is displayed the APIS system starts automatically after a delay of approximately 3 to 4 seconds.

In total between 25 and 30 different types of aircraft may be monitored with the aid of these buttons. A common emergency button to interrupt all movements of the passenger bridge as well as the docking system is positioned in the operator's panel in the passenger bridge.

To detect the distance of the aircraft from the passenger bridge a radar 4 utilizing microwave technology is used. Microwaves having a very small wave length are emitted from the antenna, are reflected by the aircraft and are again received by the antenna. The interval between the emittance and the reception of a wave is calculated and converted into a current loop which is received by the PLC unit. In the PLC unit, the current from the current loop is transformed into distance by means of a table stored in the programme.

The radar 4 is positioned in immediate vicinity to the APIS display 1 and senses distances of up to 100 m from the terminal building 5. The power is as low as 5mW which should be compared with the aircraft radar which has a power of 50kW. The microwaves are completely harmless to human beings and to equipment.

In the following a brief description is given of the way in which the guidance system "APIS" functions.
Step 1 The type of the arriving aircraft is selected either manually on the operator's panel 3 or automatically via the FIDS system 11. On the operator's panel 3 of the nose loader bridge there is a button for selection of either automatic or manual setting of the APIS system. When the type of the arriving aircraft has been selected by automatic means via the FIDS system the passenger bridges 13, 14 automatically place themselves in the correct initial position. If, on the other hand, the APIS system is activated manually, the alphanumerical display shows "NL IN" or "NL UP", if the Nose loader bridge 13 is not in its correct position and "OT IN" if the Over the Wing bridge 14 is not in its correct position. When the passenger bridges 13, 14 have assumed their correct initial positions, the systems changes to Step 2.
Step 2 Control system 2 emits information as to the selected aircraft type to the card supplying the alphanumerical displays 15, the latter showing the aircraft type in accordance with the following example:

| Type of Aircraft | Alphanumerical Display |
|---|---|
| DC-9-21 | D921 |
| DC-9-80 | D980 |
| B 747 | B747 |
| F-28 | F-28 |
| TU134 | T134 |
| TU154 | T154 |
| A300 | A300 |
| A310 | A310 |

In addition, the control system emits signals to the closing rate "thermometer" 16 and causes the centre line beacon 8 to light up. The relevant selected aircraft type symbol starts to flash. Simultaneously, the passenger bridges 13, 14 are locked in position, preventing all possibility of moving the latter. The system now is in attendance for detection of the aircraft by the radar 4.
- Step 3: When the radar has detected the aircraft and the aircraft is 20 m from the stop position, the aircraft type symbol is shown in a steady light.
- Step 4: When the aircraft is at a distance of 13 m from the stop position the light of the two lowermost rows of the closing rate "thermometer" 16 is turned off.
- Step 5: When the aircraft is at a distance of 12 m from the stop position the ligth of the next two lowermost rows of the closing rate "thermometer" 16 is turned off.
- Step 6: For every meter by which the aircraft approaches the stop position the light of a further two rows is turned off on the closing rate "thermometer".
- Step 7: When the aircraft has but one meter left to the stop position only the lights of the two uppermost rows of the closing rate "thermometer" are alight.
- Step 8: When the aircraft has reached the correct stop position the light of the two uppermost rows of the closing rate "thermometer" is turned off and the "STOP" sign is lit up in the lower display. The symbol indicating the aircraft type in the upper display is turned off.
- Step 9: If the aircraft is parked correctly (within a predetermined tolerance range), the upper display will indicate "OK". In case the aircraft moves too far, the display will flash "TOO/FAR". After a predetermined time all the lights of the entire system are turned off.

In the following, the function of the information system "APIS" will be described briefly.

All APIS systems communicate with the FIDS 11 which continually transfers information to the APIS systems. A description of information shown in the alphanumerical displays at various times is given below.
- Step 1: The relevant gate is free from aircraft and the arriving aircraft has not yet landed.
The display will show
Flight number 158
Arrival from GOT
- Step 2: The arriving aircraft has landed. The display is lit up as indicated under step 2 above.
- Step 3: The arriving aircraft has parked correctly.
The display will show
Departure flight No 117
Destination MMA
- Step 4: When the departing aircraft leaves the gate the information displayed in step 3 is blackened and the APIS system is in attendance for new information from the FIDS.

Information to the FIDS as to "Block On" and "Block Off" could also be given.

## Claims

1. A system for information/guidance and mechanised parking of aircraft to guide a pilot driving the aircraft in ground in such a manner as to allow him to stop the aircraft with extreme precision at a carefully predetermined stopping point in an airport, comprising a display unit (1) which is positioned in front of the stopping point, and characterized by a microwave antenna (4) which is positioned in or in close vicinity to the display unit and which emits microwaves directed towards the aircraft, said waves being reflected by the aircraft back to and being received by the antenna (4), so that by measuring the time difference between the emitted and the received waves the position of the aircraft may be analyzed with great accuracy by a computer and be indicated on the display unit (1), and in that the control system of the parking system and the airport FIDS System, i.e. the Flight Information and Destination System, are linked together to enable the type of arriving aircraft to be automatically selected, and to set said parking system in order to indicate the correct stop position for the selected type of aircraft.

2. A system as claimed in claim 1, **characterized** in that the display unit (1), when not used for the parking of an aircraft, may be connected to the FIDS system to serve as a display unit providing e.g. the ground personnel with information.

3. A system as claimed in claim 1 or 2, **characterized** in that the control system of the parking system and the FIDS system are linked together to enable various equipment units in the aircraft parking area of the airport to be preset according to the type of the arriving aircraft.

## Patentansprüche

1. System zur Information und Führung sowie zum mechanisierten Parken eines Flugzeugs zum Zwecke der Leitung eines das Flugzeug am Boden führenden Piloten, um ihm zu erlauben, in einem Flughafen das Flugzeug mit extremer Genauighkeit an einer sorgfältig vorbestimmten Anhaltestelle anzuhalten, umfassend eine gegenüber der Anhaltestelle aufgestellte Anzeigeeinheit (1) und **gekennzeichnet** durch eine in der Anzeigeeinheit oder in unmittelbarer Nähe davon angeordnete Mikrowellenantenne (4), die auf das Flugzeug gerichtete Mikrowellen sendet, wobei diese Mikrowellen vom Flugzeug zurück zur Antenne (4) reflektiert und von ihr empfangen werden, so dass die Position des Flugzeugs durch Messung des Zeitunterschieds zwischen der gesendeten und empfangenen Wellen mit grosser Genauigkeit von einem Computer analysierbar und auf der Anzeigeeinheit (1) darstellbar ist, und dadurch, dass das Kontrollsystem des Parksystems und das FIDS-System des Flughafens, d.h. the Flight Information and Destination System, untereinander verbunden sind, um dem Typ des eintreffenden Flugzeugs zu erlauben, automatisch ausgewählt zu werden, und um das Parksystem einzustellen, um die korrekte Anhalteposition für den ausgewählten Typ von Flugzeug anzuzeigen.

2. System nach Anspruch 1, dadurch **gekennzeichnet** dass die Anzeigeeinheit (1), wenn sie nicht zum Parken eines Flugzeugs verwendet wird, an das FIDS-System anschliessbar ist, um als Anzeigeeinheit zur Versorgung z.B. des Bodenpersonals mit Information zu dienen.

3. System nach Anspruch 1 oder 2, dadurch **gekennzeichnet** dass das Kontrollsystem des Parksystems und das FIDS-System untereinandeer verbunden sind, um verschiedenen Einrichtungseinheiten auf dem Flugzeugparkfeld des Flughafens zu erlauben, gemäss dem Typ des eintreffenden Flugzeugs voreingestellt zu werden.

## Revendications

1. Système d'information et guidage ainsi que de parcage mécanisé d'un aéronef destiné à guider un pilote qui conduit l'aéronef au sol de manière à lui permettre d'arrêter l'aéronef dans un aéroport avec une extrême précision en un point d'arrêt soigneusement prédéterminé, comprenant une unité d'affichage (1) placée en face du point d'arrêt, et **caractérisé** par une antenne à micro-ondes (4) placée dans l'unité d'affichage ou à son voisinage immédiat et qui émet des micro-ondes dirigées vers l'aéronef, ces ondes étant réfléchies par l'aéronef de façon à retourner vers l'antenne (4) et y êtes reçues, de telle sorte qu'au moyen d'une mesure de l'écart de temps entre les ondes émises et reçues la position de l'aéronef puisse être analysée avec grande précision au moyen d'un ordinateur et affichée sur l'unité d'affichage (1) et en ce que le système de contrôle du système de parcage et le système FIDS (Flight Information and Destination System) de l'aéroport sont interconnectés pour permettre une sélection automatique du type d'aéronef en instance d'arrivée et régler ledit système de parcage afin d'indiquer la position d'arrêt correcte pour le type d'aéronef sélectionné.

2. Système selon la revendication 1, **caractérisé** en ce que lorsque l'unité d'affichage (1) n'est pas utilisée pour le parcage d'un aéronef elle peut être reliée au système FIDS pour servir d'unité d'affichage fournissant de l'information par exemple au personnel au sol.

3. Système selon la revendication 1 ou 2, **caractérisé** en ce que le système de contrôle du système de parcage et le système FIDS sont interconnectés afin de permettre à diverses unités d'équipement situées sur l'aire de parcage d'aéronefs de l'aéroport d'être préréglées en fonction du type de l'aéronef en instance d'arrivée.
